# EUROPEAN PATENT APPLICATION

(11) **EP 3 821 705 A1**
(43) Date of publication of application: **19.05.2021**
(21) Application number: 18918266.0
(22) Date of filing: 20.09.2018
(51) Int. Cl.: A01K 1/02, A01K 7/06, A01K 5/02

(54) **WATER AND FEED MIXING FEEDER IN WHICH SENSOR IS PROVIDED**

(30) Priority: 11.05.2018 KR 20180054054
(71) Applicant: Kim, Ki Joo, Gyeongsangnam-do 50918 (KR)
(72) Inventor: Kim, Ki Joo, Gyeongsangnam-do 50918 (KR)
(74) Representative: Heyerhoff Geiger & Partner Patentanwälte PartGmbB
(86) International application number: PCT/KR2018/011193
(87) International publication number: WO 2019/216496

(57) **Abstract**

The present invention relates to a water and feed mixing feeder in which a sensor is provided, the mixing feeder having a water supply pipe (60) provided above a feeder board (100) to which a feed is supplied from a hopper (10) of the feeder, wherein the lower part of the hopper (10) has a feed discharge unit (20) provided thereat, and when a pig touches the feed discharge unit (20), an upper sensor senses the movement of the feed discharge unit (20) so as to supply water to the feeder board (100) such that the pig can eat the water and feet mixture. The present invention enables pigs to eat a large amount of feed in a short time since the water and feed mixture can be quickly eaten, and is remarkably clean since no residue is left in the feeder board.

## Description

### [TECHNICAL FIELD]

The present invention relates to a water and feed mixing feeder in which a sensor is provided, and more particularly, to a water and feed mixing feeder in which a sensor is provided, wherein a water supply pipe is installed together in a feeder board, the lower part of the hopper has a feed discharge unit provided thereat, a movement of the feed discharge unit is transmitted to the support rod when a pig touches the feed discharge unit, the motion sensor at the upper portion senses the movement, and water is supplied to the feeder board, such that the pig can eat the mixture of water and feed.

### [BACKGROUND ART]

The present invention relates to a feeding method for feeding a large amount of feed to pigs in a short period of time in a feeder. Normal feeders is configured to provide water and feed separately. The separate configuration of the feed refers to a condition of dry feed. Korean Unexamined Patent Publication No. 10-2015-0083500 as a conventional feeder discloses a device for fixing a water supply pipe of a pig farming feeder including a water supply device in which a water supply pipe is installed at the bottom of a diaphragm valve to which water is supplied, a feed supply container coupled to a side of the water supply device, and a feeder board installed under the water supply device and the feed supply container. In the device for fixing the water supply pipe of the pig farming feeder, which has the feeder board in which each of a feed supply unit and a water supply unit is formed concentrically, and the device for fixing the water supply pipe of the pig farming feeder includes a horizontal bracket attached to an outer wall of the feed supply container, a vertical bracket welded vertically to the horizontal bracket and having a center hole through which the water supply pipe of the water supply device passes, and a handle screwed to the vertical bracket and moves back and forth horizontally.

In addition, Korean Patent Registration No. 10-1324864 discloses a hopper structure of a feeder. In the hopper structure of a feeder including an upper hopper and a feeder board installed under the hopper to feed pigs, a motor is installed at an upper portion of the hopper, a feed gathering prevention tube is installed to a motor shaft under the motor, wherein the feed gathering prevention tube includes a support cylinder installed at a distance from the motor shaft, and a tube installed at a distance outside the support cylinder, in which a pedestal for supporting the support cylinder is installed to the motor shaft under the support cylinder, and a plurality of tube support pieces are connected between the support cylinder and the tube, so that the tube is coupled to the support cylinder.

However, the related art keeps the feed dry because water is not supplied to the feed supply unit of the feeder board, so the dried feed stays in the mouth of the pig for a long time, so the dried feed is difficult to be consumed in a short time. Therefore, it is difficult for the pig to eat the feed, so the eating rate is low, and the pig fails to eat the feed a lot, thereby leaving a residue.

### [DISCLOSURE]

### [TECHNICAL PROBLEM]

Accordingly, the present invention is provided to solve the above-described problems. The present invention provides a sensor-provided water and feed mixing feeder which enables the pig to eat a large amount of feed in a short time since the water and feed mixture can be quickly eaten, and is clean since no residue is left in the feeder board.

### [TECHNICAL SOLUTION]

The present invention relates to a sensor-provided water and feed mixing feeder, the mixing feeder having a water supply pipe (60) provided above a feeder board (100) to which a feed is supplied from a hopper (10) of the feeder, wherein the lower part of the hopper (10) has a feed discharge unit (20) provided thereat, an upper sensor senses the movement of the feed discharge unit (20) when a pig touches the feed discharge unit (20), thereby supplying water to the feeder board (100), such that the pig can eat the water and feed mixture. When the pig pushes or rotates the feed discharge unit (20), the sensor senses the push or rotation and the sensor sends a signal to the control unit, so that the control unit supplies water by opening an electric valve of the water supply pipe (60).

### [ADVANTAGEOUS EFFECTS]

Therefore, according to the present invention, the pig can eat a large amount of feed in a short time since the water and feed mixture can be quickly eaten, and the feeder board can be clean since no residue is left therein.

### [DESCRIPTION OF DRAWINGS]

FIG. 1 is a view showing a conventional feeder.
FIG. 2 is a front view showing a water and feed mixing feeder of the present invention.
FIG. 3 is a photograph of the water and feed mixing feeder of the present invention.
FIG. 4 is a photograph showing a coupled upper end of a support rod of the present invention.
FIG. 5 is a photograph showing a coupled lower end of the support rod of the present invention.
FIG. 6 is a photograph showing that the water and feed mixing feeder of the present invention is upside down.
FIG. 7 is a detailed photograph showing a feed discharge unit of FIG. 6.

### [Description of Drawings]

100: Feeder board
10: Hopper 11: Inner hopper
12: Outer hopper 20: Feed discharge unit
60: Water supply pipe
30: Support fixture 40: Support rod
50: Ring
110: Convex part 120: Water feed supply part
111: plane part 112: Primary incline part
123: Secondary incline part

### [BEST MODE]

### [Mode for Invention]

The present invention relates to a sensor-provided water and feed mixing feeder, which has a water supply pipe (60) provided above a feeder board (100) to which a feed is supplied from a hopper (10) of the feeder, the lower part of the hopper (10) has a feed discharge unit (20) provided thereat, an upper sensor senses the movement of the feed discharge unit (20) when a pig touches the feed discharge unit (20), thereby supplying water to the feeder board (100), such that the pig can eat the water and feed mixture. When the pig pushes or rotates the feed discharge unit (20), the sensor senses the push or rotation and the sensor sends a signal to the control unit, so that the control unit supplies water by opening an electric valve of the water supply pipe (60).

In addition, when the pig pushes or rotates the feed discharge unit (20), the support rod is moved, the sensor senses the movement of the support rod, and the sensor sends a signal to the control unit, so that the control unit supplies water by opening an electric valve of the water supply pipe (60).

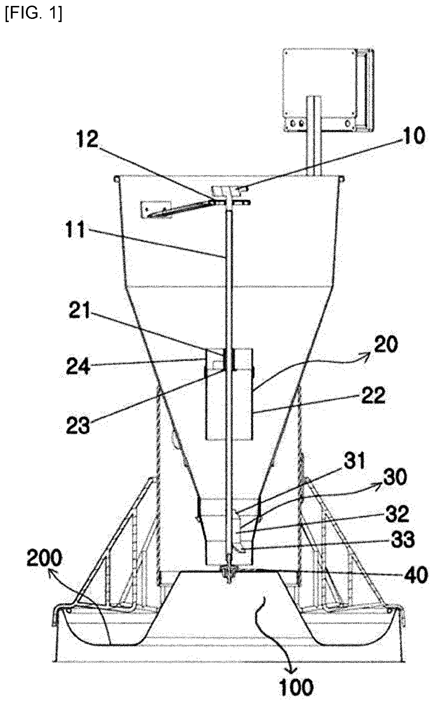

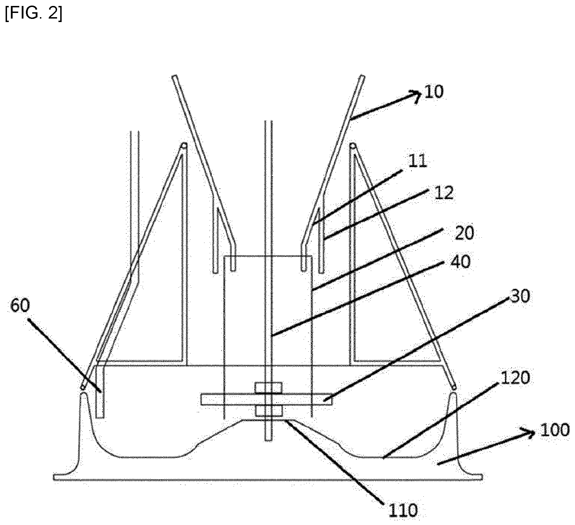

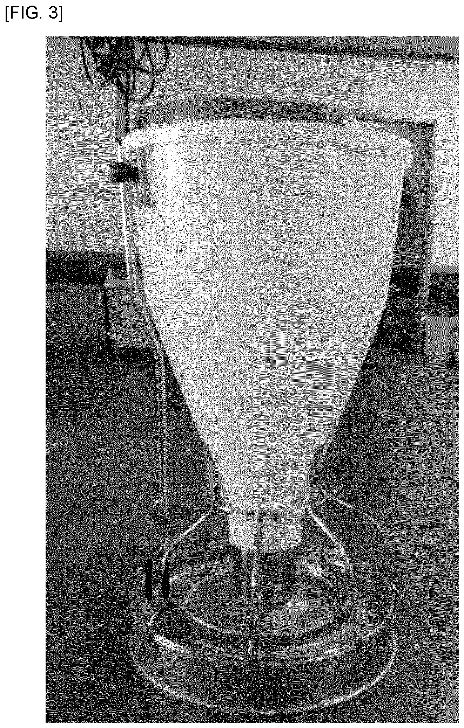

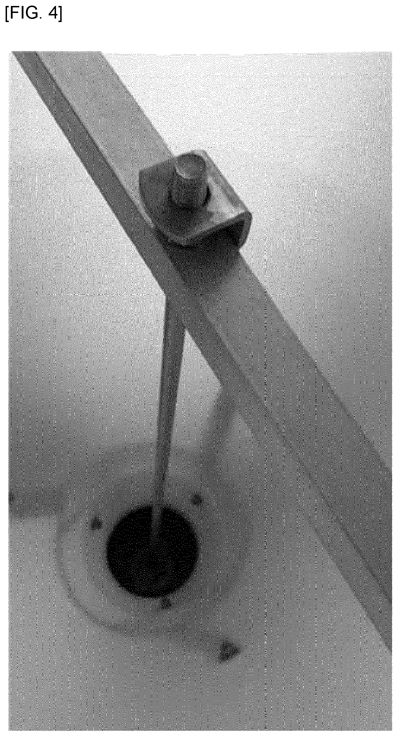

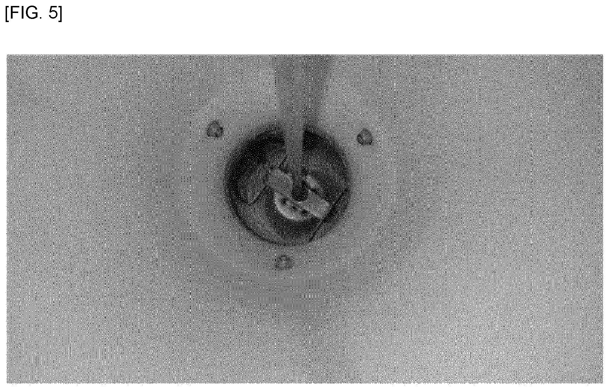

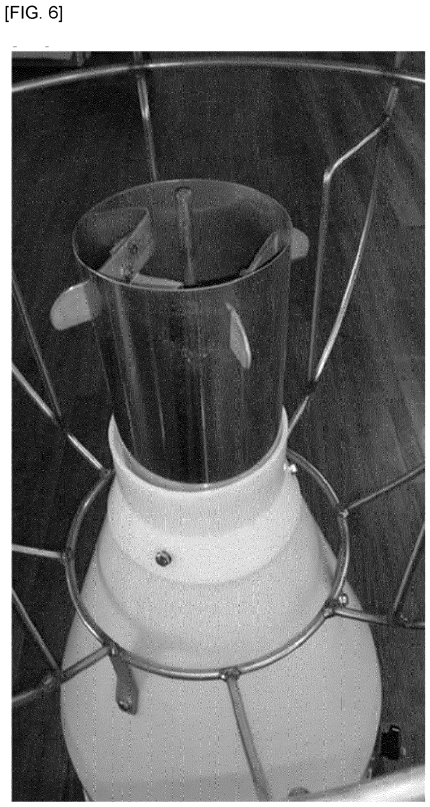

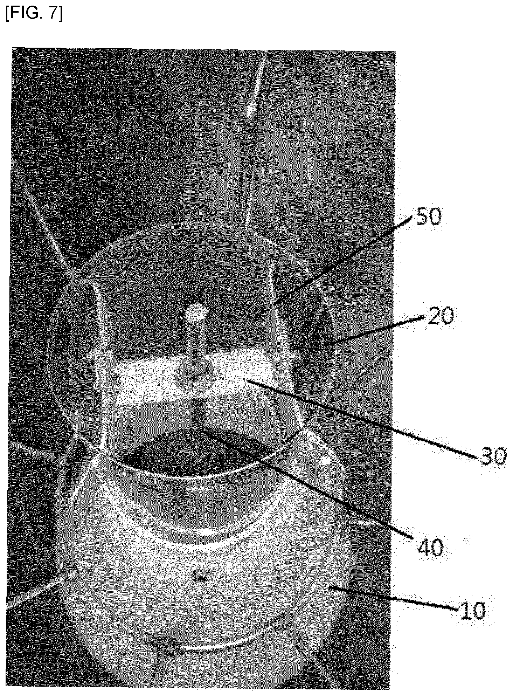

The present invention will be described in detail with reference to the accompanying drawings. FIG. 1 is a view showing a conventional feeder. FIG. 2 is a front view showing a water and feed mixing feeder of the present invention. FIG. 3 is a photograph of the water and feed mixing feeder of the present invention. FIG. 4 is a photograph showing a coupled upper end of a support rod of the present invention. FIG. 5 is a photograph showing a coupled lower end of the support rod of the present invention. FIG. 6 is a photograph showing that the water and feed mixing feeder of the present invention is upside down. FIG. 7 is a detailed photograph showing a feed discharge unit of FIG. 6.

The present invention provides a method that enables the pig to eat a large amount of feed in a short period of time since the pig can quickly eat the water and feed mixture.

In order for the pig to eat the feed from the feeder, the pig is required to touch the feed discharge unit in the feeder, so that the feed comes out. At this time, the sense senses the movement of the discharge unit and converts the movement into an electric signal to open and close a solenoid valve.

It is very important to properly supply the amount of water in proportion to the amount of the discharged feed, and the water supply is controlled by the control unit. The water comes out once when the discharge unit is touched once, and the water may come out again only after a predetermined period of time even when the discharge unit is touched a few more times afterward. The pig eats a large amount of feed in a short time by enabling the pig to easily eat the feed by properly balancing the mixing ratio of the feed or water, for example, an exact amount of water discharged at one time, and a way of allowing the water to be discharge little by little each time the discharge unit is touched.

The sensor may be installed at an upper portion or installed at a lower portion. When the sensor is installed at the upper portion, a commonly used motion sensor is used, and when the sensor is installed at the lower portion, a commonly used contact sensor is used.

First, the installation in the lower portion will be described.

The present invention a water supply pipe is installed together in a feed supply part of a feeder board, and a sensor is installed at a site in which the feed discharge unit is installed under the hopper to which the feed is supplied from the top of the feeder. When the pig pushes the feed discharge unit, the feed discharge unit touches a side of the sensor, and when the sensor sends a signal to the control unit, the control unit opens the electric valve of the water supply pipe, so that water is supplied. The feed discharging unit is formed in a tubular shape having open top and bottom and a round cross section.

The sensor is installed at an outer side of a lower portion of the hopper, in which an upper end of the feed discharge unit is inserted between the outer surface of the hopper and the sensor, and the upper end of the feed discharge unit is installed with a gap between the outer surface of the hopper and the sensor. Thus, when the pig touches the feed discharge unit, the upper end of the feed discharge unit touches the outer surface of the hopper or the sensor.

The lower portion of the hopper is divided into two parts, that is, an inner hopper and an outer hopper, so that the feed discharge unit is installed at an outer surface of the inner hopper or at an inner surface of the outer hopper, in which the upper end of the feed discharge unit is inserted between the outer surface of the inner hopper and the inner surface of the outer hopper. The upper end of the feed discharge unit is installed with a gap between the outer surface of the inner hopper and the inner surface of the outer hopper, and thus the upper end of the feed discharge unit is sensed by the sensors installed on the outer surface of the inner hopper and the inner surface of the outer hopper when the pig touches or rotates the feed discharge unit.

The inner hopper is inclined to have a lower diameter smaller than an upper diameter, and the outer hopper is manufactured to have a vertical shape.

A support fixture is coupled to a lower portion of the feed discharge unit, a support rod is vertically and upwardly coupled to the support fixture, an upper end of the support rod is coupled to a frame at the upper portion of the hopper, and the support rod is pulled up and down to adjust a length and fixed by fastening the nut, so that the amount of supplied feed is adjusted. In addition, since the inner hopper is inclined to have a lower diameter smaller than an upper diameter, and the outer hopper is manufactured to have the vertical shape, the support rod is pulled up and down to adjust and fix the length, so that a contact distance between the sensor and the upper portion of the feed discharge unit is adjusted, thereby controlling the amount of feed.

The hopper and the feed discharge unit are formed of a metal material, in particular, a stainless material.

According to the present invention, when the sensor is installed in the lower portion, a commonly used contact sensor is used as the sensor, and an optical sensor or a magnetic sensor may be used.

The support fixture is formed in an annular rod shape and coupled to a ring, in which the ring passes through an inner wall surface of the feed discharge unit to support the inner wall, and the support rod is coupled by upper and lower nuts while vertically passing through a center of the support fixture.

In particular, the water supply pipe is installed on a side wall of the feeder to prevent the pig from being interrupted with eating the feed.

In addition, the feeder board includes a central convex part positioned under the hopper to which the feed is supplied, and a feed supply part around the convex part to contain the feed.

The convex part includes a flat part on the top, a primary incline part connected to the flat part and having a slope gently formed to the bottom, and a secondary inclined part inclined steeply from the primary inclined part.

The feed supply of the hopper will be described. When the pig is fed, the feed discharge unit is moved by touching the feed discharge unit, and its own load and the above impact allow the feed stored in the hopper to flow down without clumping.

The annular round rod-shaped support fixture is horizontally coupled to the lower end of the support rod so as to be rotated around the support rod, arc-shaped rings are fixed to both ends of the support fixture, respectively, the both ends of the ring are installed to pass through the wall of the feed discharge unit, so that the feed discharge unit is rotated around the fixed support rod when the pig touches the ring of the feed discharge unit. Meanwhile, the support rod may be integrated with the support fixture, so that the support rod may be rotated according to rotation of the support fixture.

Meanwhile, as a second example of the present invention, when the sensor is installed at the upper portion, a general motion sensor is used as the sensor. The motion sensor is installed on the upper portion of the support rod. When the support rod rotates, the rotation is detected by the motion sensor installed therearound and a signal is sent to the control unit, the control unit supplies water by opening the electric valve of the water supply pipe. Thus, when the water and the feed are mixed and supplied to the feeder board 100, the pig may eat the mixture of water and feed. The motion sensor is mainly installed in the upper portion or middle portion of the hopper. When installed in the upper portion, the sensor is installed to the frame at the upper portion of the hopper, and when installed in the middle portion, the sensor is installed to the frame of the middle portion or to the inner wall of the hopper. In other words, as shown in FIG. 4, a support rod is vertically and upwardly coupled to the support fixture, so that the upper end of the stainless steel pipe into which the support rod is movably inserted is coupled to the frame at the upper portion of the hopper by a nut. Therefore, according to another embodiment, the sensor also may be installed on the inner wall of the stainless steel pipe to sense the movement of the support rod. Therefore, according to the present invention, since the pig quickly eats the water and feed mixture, the pig can eat a large amount of feed in a short time, and the feeder may be clean since no residue is left therein.

## Claims

1. A water and feed mixing feeder in which a sensor is provided, wherein a water supply pipe (60) is installed together with a feeder board (100) to which a feed is supplied from a hopper (10) of the feeder; a feed discharge unit (20) is installed at a lower part of the hopper (10); a movement of the feed discharge unit (20) is transmitted to a support rod (40) when a pig touches the feed discharge unit (20); and a sensor installed in an upper or middle portion of the hopper senses the movement, thereby supplying water to the feeder board (100), such that the pig eats the water and the feed while the water and the feed are mixed with each other, and wherein, when the pig pushes or rotates the feed discharge unit (20), the sensor senses the push or rotation and sends a signal to a control unit, so that the control unit opens an electric valve of the water supply pipe (60) to supply the water.

2. The water and feed mixing feeder of claim 1, wherein the support rod (40) is rotated when the pig pushes or rotates the feed discharge unit (20), the sensor senses a movement of the support rod, the sensor sends a signal to the control unit, and the control unit opens the electric valve of the water supply pipe (60) to supply the water.
